# EUROPÄISCHE PATENTSCHRIFT

(11) **EP 2 516 121 B1**
(45) Veröffentlichungstag und Bekanntmachung des Hinweises auf die Patenterteilung: **16.04.2014**
(21) Anmeldenummer: 10768181.9
(22) Anmeldetag: 02.10.2010
(51) Int. Cl.: B29B 11/14, B29C 49/64, B29C 49/06, B29C 49/12, B29B 11/10, B29B 11/08, B29B 11/12

(54) **PREFORM ZUR HERSTELLUNG VON KUNSTSTOFFBEHÄLTERN IN EINEM ZWEISTUFIGEN STRECKBLASPROZESS**
PREFORM FOR PRODUCING PLASTIC CONTAINERS IN A TWO-STAGE STRETCH BLOW-MOULDING PROCESS
PRÉFORME PERMETTANT LA FABRICATION DE RÉCIPIENTS EN PLASTIQUE PAR UN PROCÉDÉ DE FORMAGE PAR SOUFFLAGE-ÉTIRAGE À DEUX ÉTAPES

(30) Priorität: 23.12.2009 CH 19802009
(43) Veröffentlichungstag der Anmeldung: 31.10.2012
(73) Patentinhaber: Alpla-Werke Alwin Lehner GmbH und Co. KG, 6971 Hard (AT)
(72) Erfinder: SIEGL, Robert, A-6850 Dornbirn (AT)
(74) Vertreter: Bohest AG Branch Ostschweiz
(86) Internationale Anmeldenummer: PCT/EP2010/006021
(87) Internationale Veröffentlichungsnummer: WO 2011/076301

(56) Entgegenhaltungen:
- DE-A1- 2 910 609
- JP-A- 1 182 022
- US-A- 3 347 965
- US-A- 5 047 271

## Beschreibung

Die Erfindung betrifft einen Preform zur Herstellung von Kunststoffbehältern in einem zweistufigen Streckblasprozess gemäss dem Oberbegriff des Patentanspruchs 1.

Ein grosse Zahl der heutzutage eingesetzten Kunststoffbehälter, insbesondere beispielsweise Kunststoffflaschen und dergleichen, wird in einem Streckblasprozess hergestellt. Bei diesem Verfahren wird ein sogenannter Preform, der meist eine längliche, röhrchenartige Gestalt besitzt, an seinem einen Längsende einen Boden und am anderen Längsende einen Halsbereich mit ausgeformten Gewindeabschnitten oder dergleichen aufweist, in eine Formkavität einer Blasform eingesetzt und durch ein mit Überdruck eingeblasenes Medium aufgeblasen. Dabei wird der Preform zusätzlich mit einem durch die Halsöffnung eingefahrenen Reckdorn in axiale Richtung gereckt. Nach dem Reck-/Blasvorgang wird der fertige Kunststoffbehälter aus der Blasform entformt.

Der ein oder mehrschichtige Preform wird vor dem Streckblasprozess üblicherweise in einem separaten Spritzgiessverfahren hergestellt. Es ist auch schon vorgeschlagen worden, Preforms in einem Kunststofffliesspressverfahren herzustellen. Als Rohstoff für die Herstellung von Kunststoffbehältern im Streckblasprozess kommen vor allem Polypropylen oder PET (Polyethylenterephthalat) zum Einsatz. Polypropylen und PET sind vielfach erprobt und ihre Eigenschaften sind hinlänglich bekannt. Im sogenannten Einstufen-Streckblasprozess wird der Preform unmittelbar nach seiner Herstellung zu einem Kunststoffbehälter aufgeblasen und gereckt. Vielfach werden die Kunststoffbehälter jedoch in einem zweistufigen Verfahren räumlich und zeitlich getrennt vom Streckblasprozess hergestellt und für die spätere Verwendung zwischengelagert. Beim späteren Streckblasprozess werden die Preforms wieder erwärmt, in eine Blasform eingebracht, mit einem Reckdorn in Längsrichtung gestreckt und durch Überdruck zu einem Kunststoffbehälter gemäss der Formkavität aufgeblasen. Auf diese Weise können beide Prozesse, das Spritzgiessen und das Streckblasen, separat und optimal betrieben werden.

Die im Streckblasverfahren eingesetzten Preforms weisen üblicherweise eine längliche Gestalt auf und besitzen einen konvex nach aussen gewölbten Boden. Der Halsbereich der Preforms ist bereits vollständig ausgebildet und mit Gewindeabschnitten oder dergleichen formschlüssigen Vorsprüngen versehen, die das Anbringen eines Verschlusses oder Deckels ermöglichen, der mit korrespondierend ausgebildeten Verriegelungselementen ausgestattet ist. Im Zweistufenprozess müssen die Preforms vor dem Streckblasen wieder auf ihren Umformtemperaturbereich aufgeheizt werden. Dazu werden die Preforms mit ihrem Halsbereich auf fingerartige Halterungen gesteckt und durch eine Heizstation transportiert. Das Aufheizen der Preforms erfolgt vielfach über Infrarotstrahlung oder Strahlung im nahen Infrarot, die von Quarzrohrstrahlern erzeugt wird. Zur besseren Ausnutzung der von den Quarzrohrstrahlern abgestrahlten Energie sind ein oder mehrere Spiegel vorgesehen, welche die elektromagnetische Strahlung reflektieren. Die Preforms werden in der Heizstation zwischen den Quarzrohrstrahlern und den gegenüber angeordneten Spiegeln transportiert. Durch den bombiert ausgebildeten Boden des Preforms gelangt die eingestrahlte Infrarotstrahlung durch Streuung oder direkt auch zu den fingerartigen Halterungen der Preforms, welche sich dadurch erwärmen. Um zu verhindern, dass es dadurch zu Verformungen des mit hoher Genauigkeit ausgeformten Halsbereichs der Preforms kommt müssen die fingerartigen Halterungen gekühlt werden. Nachdem auch durch die Kühlung der Halterungen die absorbierte eingestrahlte Energie oft nicht in genügenden Ausmass abgeführt werden kann, muss der Preformhals oft mit grösserer Wandstärke ausgebildet werden als es für den aus dem Preform zu fertigenden Kunststoffbehälter erforderlich ware. Ein Preform der geschilderten gattungsbildenden Art ist beispielsweise aus der JP 1182022 bekannt. Der dort beschriebene Preform ist aus einem für den Streckblasprozess geeigneten Kunststoff gefertigt und mit einem Preformboden ausgestattet, der über seine radiale Erstreckung eine konstante Wandstärke aufweist. Aus der US-3,347,965 ist ein weiterer Preform bekannt, der ebenfalls aus einem für den Streckblasprozess geeigneten Kunststoff gefertigt ist. Dieser Preform weist einen ebenen Preformboden mit einer konstante Wandstärke auf. Beim Streckblasen wird der Preform mit Hilfe eines Reckdoms der Länge nach gestreckt. Im Bereich der Berührungsfläche des Bodens des Preforms mit dem Reckdorn erkaltet der Boden relativ schnell, und es kann im Bodenbereich des im Streckblasprozess hergestellten Kunststoffbehälters eine unerwünschte Anhäufung von amorphem Material auftreten.

Aufgabe der vorliegenden Erfindung ist es daher, diesen Nachteilen der Preforms des Stands der Technik abzuhelfen. Es soll ein Preform geschaffen werden, der es erlaubt, den Halsbereich auch mit reduzierten Wandstärken auszubilden. Bei der Weiterverarbeitung des Preforms zu einem Kunststoffbehälter im zweistufigen Streckblasprozess sollen unerwünschte Anhäufungen von amorphem Material im Bodenbereich des Behälters vermieden werden können.

Diese und auch noch weitere Aufgaben werden erfindungsgemäss gelöst durch einen Preform mit den im Patentanspruch 1 aufgelisteten Merkmalen. Weiterbildungen sowie vorteilhafte und bevorzugte Ausführungsvarianten der Erfindung sind Gegenstand der abhängigen Ansprüche.

Durch die Erfindung wird ein Preform zur Herstellung von Kunststoffbehältern in einem zweistufigen Streckblasprozess vorgeschlagen, der einen länglich ausgebildeten Preformkörper aufweist, dessen eines Längsende mit einem Boden verschlossen ist und an dessen anderes Längsende ein Halsabschnitt mit Gewindeabschnitten oder dergleichen formschlüssigen Vorsprüngen anschliesst. Des Preform ist aus einem für den Streckblasprozess geeigneten Kunststoff gefertigt, der bei einer Temperatur von 10°C bis 120°C eine Brechzahl von 1,3 bis 1,6 aufweist. Der Preformboden ist derart ausgebildet, dass seine Aussenwandung und seine Innenwandung eine flache Zerstreuungslinse begrenzen. Die Aussenwandung und die Innenwandung des als eine Zerstreuungslinse ausgebildeten Preformbodens weisen dabei Krümmungsradien auf, die wenigstens um den Fakter 1,4 mal grösser sind als die Krümmungsradien der zugehörigen Aussenwandung bzw. Innenwandung im Bereich des Preformkörpers.

In Kombination mit der Brechzahl des Preformmaterials führt die Gestaltung des Preformbodens als eine flache Zerstreuungslinse dazu, dass die eingestrahlte elektromagnetische Heizstrahlung von der fingerartigen Halterung weg abgelenkt wird. Durch die erfindungsgemässe Ausgestaltung des Preformbodens wird angestrebt, dass ein grösserer Anteil der eingebrachten elektromagnetischen Wärmestrahlung im Preformboden und in der Preformwandung absorbiert wird. Dadurch gelangt weniger Strahlungsenergie zur fingerartigen Halterung des Preforms bei seinem Transport durch die Heizstation, und die Halterung erwärmt sich deutlich weniger. Das Halsteil des Preforms, das in direktem Kontakt mit der fingerartigen Halterung steht, wird dadurch ebenfalls weniger erwärmt. Dadurch ist die Gefahr einer Deformation des Halsteils deutlich reduziert, und es besteht die Möglichkeit, das Halsteil mit einer geringeren Wandstärke auszubilden. Die Verringerung der Wandstärke des Preforms im Halsteil führt zu einer Reduktion des Bedarfs an kostspieligem Rohmaterial. Gerade bei Massenartikeln wie Kunststoffbehältern hat eine Materialreduktion ökonomische aber auch ökologischer Vorteile.

Die erfindungsgemässe Ausbildung führt insgesamt zu einer Verflachung des Preformbodens. Dadurch kommt es beim Streckprozess am Anfang nur in einem kleinen Bereich zu einer Berührung zwischen dem Reckdorn, dessen Vorderende einen kleinen Krümmungsradius aufweist, und dem Preformboden mit verhältnismässig grossem Krümmungsradius. Erst bei sehr hohen Reckgeschwindigkeiten und -drücken und gegen Ende des mechanischen Reckprozesses vergrössert sich dieser Kontaktbereich. Dadurch wird die lokale Abkühlung des Preformbodens auf einen sehr kleinen Bereich eingeschränkt, und es können unerwünschte Anhäufungen von amorphem Material im Bodenbereich des hergestellten Kunststoffbehälters vermieden werden. Vielmehr steht das noch nicht erkaltete Kunststoffmaterial im Preformboden für den restlichen Blasvorgang zur Verfügung. Dies ermöglicht auch einen geringeren Materialeinsatz im Boden des Preforms.

In einer Ausführungsvariante der Erfindung weist der als eine flache Zerstreuungslinse ausgebildete Preformboden im Bereich der Achse des Preforms bzw. im Zentrum der Zerstreuungslinse eine Wandstärke auf, die wenigstens um 0,2 mm kleiner ist als eine Wandstärke des Preformbodens am Übergang in den Preformkörper.

Der Boden des Preforms ist insbesondere derart gestaltet, dass eine im Bereich des Bodens im wesentlichen senkrecht zur Preformachse eingebrachte elektromagnetische Wärmestrahlung einer Wellenlänge von 0,5 µm bis 2 µm zu einem wesentlichen Teil durch Totalreflexion innerhalb des Bodens und/oder des Körpers des Preforms absorbiert wird. Dadurch ist gewährleistet, dass sehr wenig elektromagnetische Strahlung zu der fingerartigen Halterung gelangt, und das in Kontakt mit der Halterung befindliche Halsteil wärmt sich weniger stark auf. Indem ein grösserer Anteil der eingebrachten Wärmestrahlung im Preformboden und/oder dem Preformkörper absorbiert wird, erhöht sich auch der Wirkungsgrad der Preformheizung.

Der Preformboden kann plankokav oder konvexkonkav ausgebildet sein. Die Begriffe "plan" bzw. "konvex" beziehen sich dabei auf die erste Fläche, auf welche die elektromagnetische Strahlung auftrifft, d.h. auf die Aussenwandung des Preformbodens. Der Begriff "konkav" betrifft die gegenüberliegende Innenwandung des Preformbodens. Die Aussenwandung des Bodens des Preforms soll einen grösseren Krümmungsradius aufweisen als die Innenwandung des Preforms im Bereich seines Bodens. Im Fall einer planen Ausbildung der Aussenwandung ist der Krümmungsradius unendlich gross.

Preforms, die erfindungsgemäss ausgebildet sind und für die Weiterverarbeitung in einem zweistufigen Streckblasprozess vorgesehen sind, bestehen mit Vorteil aus Kunststoffen bzw. Kunststoffgemischen der Gruppe bestehend aus Polyester, PET (Polyethylenterephthalat), Polyolefinen, Polystyrole und PLA (Polymilchsäuren).

Der erfindungsgemässe Preform kann je nach dem vorgesehenen Einsatzzweck ein- oder mehrschichtig aufgebaut sein. Er kann auch Barriereadditive, insbesondere Sauerstofffänger, Nanoclays oder UV-Blocker, aufweisen. In einer weiteren Ausführungsvariante der Erfindung kann der mehrschichtig aufgebaute Preform auch eine Barriereschicht gegen Sauerstoff und/oder UV Strahlung und/oder eine Gleitbeschichtung und/oder eine Restentleerungsbeschichtung aufweisen.

Der erfindungsgemässe Preform ist beispielsweise in einem Kunststoffspritzverfahren hergestellt. Kunststoffspritzverfahren bzw. Spritzgiessverfahren sind hinlänglich erprobt und führen zu Preforms mit der gewünschten Genauigkeit. Der Anspritzbereich des Preforms befindet sich dabei zweckmässigerweise im Bereich des Bodens. Am aus dem Preform hergestellten Kunststoffbehälter ist er dadurch im allgemeinen in Gebrauchsstellung nicht sichtbar.

Ein alternatives Herstellverfahren für den Preform, das ebenfalls zu qualitativ hochwertigen Ergebnissen führt und für die Massenherstellung sehr gut geeignet ist, stellt das Kunststofffliesspressverfahren dar.

Der erfindungsgemäss ausgebildete Preform kann auch in einem Extrusionsblasverfahren hergestellt sein. Dieses neuerdings vermehrt herangezogene Herstellverfahren zeichnet sich durch seinen hohen Durchsatz und niedrige Herstellkosten aus und ist insbesondere auch für mehrschichtig aufgebaute Preforms geeignet. Mehrschichtige Preforms können auch in einem sogenannten "Overmolding"-Verfahren hergestellt werden.

Der erfindungsgemäss ausgebildete Preform kann wenigstens bereichsweise mit einer vom übrigen Preformkörper abweichende Farbe versehen sein oder in einer mehrschichtigen Ausführungsvariante wenigstens eine Farbschicht aufweisen. Die unterschiedliche Farbgebung bzw. die Farbschicht kann u.a. auch dazu dienen, die beim Aufheizen des Preforms eingebrachte Strahlungsenergie noch besser und gezielter im Preformmaterial zu absorbieren.

In einer weiteren Ausführungsvariante des Preforms kann auch vorgesehen sein, dass dieser in seinem Bodenbereich eine Aussenwandung besitzt, die eine grössere Rauigkeit aufweist als eine Aussenwandung des Körpers des Preforms. Die erhöhte Rauigkeit kann ebenfalls für eine bessere Absorption der eingebrachten Strahlungsenergie im Preformmaterial dienen.

Eine hinsichtlich des reduzierten Materialeinsatzes interessante Ausführungsvariante des Preforms besitzt ein Halsteil, das im Bereich der Gewindeabschnitte oder dergleichen formschlüssigen Vorsprünge eine Mindestwandstärke aufweist, die um wenigstens 20 % kleiner ist als eine mittlere Wandstärke im Bereich des Preformkörpers.

In einer weiteren Ausführungsvariante der Erfindung weist das Halsteil im Bereich der Gewindeabschnitte oder dergleichen formschlüssigen Vorsprünge, insbesondere am Gewindegrund, eine Mindestwandstärke auf, die kleiner ist als 1,34 mm.

Kunststoffbehälter, die in einem zweistufigen Streckblasprozess aus einem erfindungsgemäss ausgebildeten Preform gefertigt sind, weisen vielfach eine bessere und homogenere Materialverteilung auf als herkömmliche Kunststoffbehälter des Stands der Technik und besitzen dadurch gleichmässigere Festigkeitseigenschaften gegenüber mechanischen und thermischen Beanspruchungen, beispielsweise in Anwendungen, in denen das Füllgut heiss abgefüllt wird.

Weitere Vorteile und Ausführungsvarianten der Erfindung ergeben sich aus der nachstehenden Beschreibung eines Ausführungsbeispiels unter Bezugnahme auf die schematischen Zeichnungen. Es zeigen in nicht massstabsgetreuer Darstellung:
- Fig. 1: einen erfindungsgemässen Preform in halbseitigem Axialschnitt in einer Heizstation; und
- Fig. 2: einen erfindungsgemässen Preform in halbseitigem Axialschnitt.

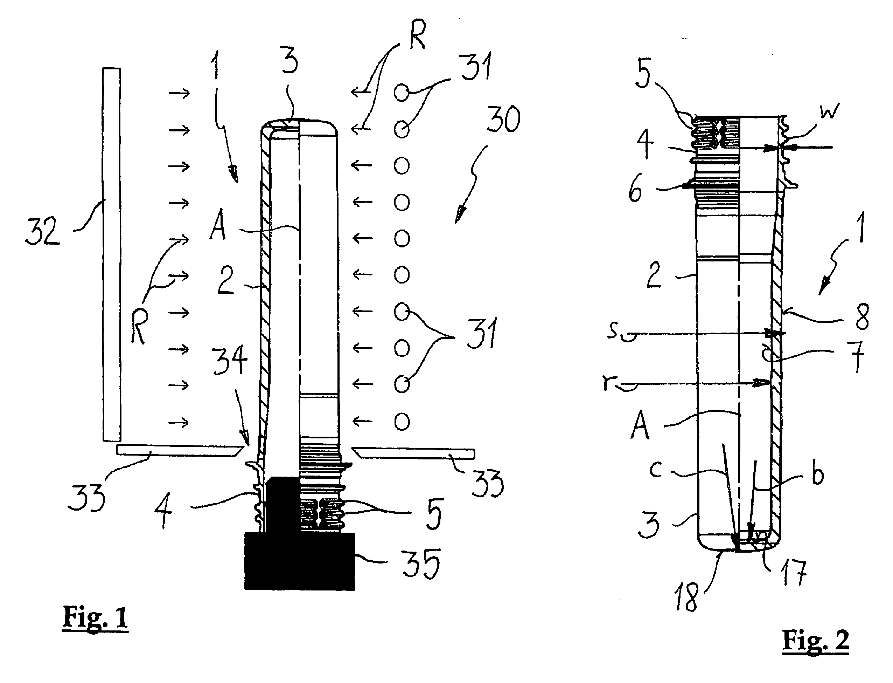

Fig. 1 zeigt schematisch einen halbseitig axial geschnittenen Preform, der gesamthaft mit dem Bezugszeichen 1 versehen ist, während seines Transports durch eine Heizstation 30. Der Preform 1 weist einen länglichen Preformkörper 2 auf, dessen eines Längsende mit einem Preformboden 3 verschlossen ist. An den gegenüberliegenden Endabschnitt des Preformkörpers 2 schliesst ein Halsteil 4 an, an dessen Aussenseite Gewindeabschnitte 5 oder dergleichen ausgebildet sind. Die Gewindeabschnitte 5 oder dergleichen erlauben das Aufschrauben eines mit korrespondierenden Verriegelungselementen ausgestatteten Verschlusses oder Deckels. Der Preform 1 ist beispielsweise in einem Kunststoffspritzverfahren oder in einem Fliesspressverfahren hergestellt. Er kann auch in einem Extrusionsblasverfahren hergestellt sein. Der Preform 1 ist ein Zwischenprodukt des zweistufigen Streckblasprozesses, bei dem zunächst der Preform 1 hergestellt und zeitlich und räumlich getrennt der Preform durch axiales Verstrecken und radiales Aufblasen zu einem Kunststoffbehälter umgeformt wird. Der zweistufige Streckblasprozess hat den Vorteil, dass die Preformherstellung und die Herstellung des Kunststoffbehälters unabhängig voneinander jeweils mit der optimalen Taktrate erfolgen können.

Damit der Preform 1 in der Streckblasvorrichtung verstreckt und durch Überdruck aufgeblasen werden kann, muss er zuerst wieder auf eine für den Streckblasprozess erforderliche Temperatur aufgeheizt werden. Dazu wird er durch eine oder mehrere Heizstationen 30 transportiert. Die Heizstation 30 umfasst eine Anzahl von Heizlampen, üblicherweise Quarzrohrstrahler 31, die elektromagnetische Strahlung R im infrarotnahen und im Infrarotbereich abstrahlen. Die Wellenlänge der abgestrahlten Strahlung liegt im Bereich von 0,5 µm bis 2 µm. Üblicherweise sind mehrere Quarzrohrstrahler 31 übereinanderliegend angeordnet. Den Quarzrohrstrahlern 31 gegenüberliegend ist eine Reflektoranordnung 32, beispielsweise Metallreflektoren, vorgesehen, die die von den Quarzrohrstrahlern emittierte elektromagnetische Strahlung R reflektiert. Der Preform 1 wird durch eine Gasse zwischen den Quarzrohrstrahlern 31 und der Reflektoranordnung 32 transportiert. Dazu ist er kopfüber mit seinem Halsteil 4 auf eine fingerartige Halterung 35 gesteckt, die kontinuierlich oder getaktet durch die Heizstation 30 transportiert wird. Üblicherweise wird die fingerartige Halterung 35 dabei auch noch um ihre Achse rotiert, damit der Preform 1 von allen Seiten aufgeheizt wird. Die fingerartige Halterung 35 bewegt sich unterhalb einer festen oder beweglichen Abschottung 33, die mit einer schlitzfömigen Öffnung 34 für den Preform 1 versehen ist. Die Abschottung 33 soll verhindern, dass die erwärmende elektromagnetische Strahlung R von den Quarzrohrstrahlern 31 bzw. von der Spiegelanordnung 32 zu der fingerartigen Halterung 35 und zum Halsteil 4 des Preforms 1 gelangt. Die fingerartige Halterung 35 ist meist zusätzlich auch noch mit einer Kühlung, beispielsweise einer Wasserkühlung, versehen, um zu verhindern, dass sie sich übermässig erwärmt. Infolge dieser Erwärmung könnte sonst das mit hoher Präzision gefertigte Halsteil 4 des Preforms 1, das sich in unmittelbarem Kontakt mit der fingerartigen Halterung 35 befindet, erweicht und deformiert werden.

Infolge der Abschottung 33 gelangt relativ wenig elektromagnetische Strahlung zu der fingerartigen Halterung 35. Ein Problem stellt jedoch bei den Preforms des Stands der Technik der stark bombierte Preformboden dar. Dieser führt dazu, dass im Bereich des Bodens eingebrachte elektromagnetische Wärmestrahlung durch Beugung und Mehrfachreflexionen zu der fingerartigen Halterung 35 gelangt und diese erwärmt. Um diesem Problem abzuhelfen, ist der erfindungsgemässe Preform 1 aus einem für den Streckblasprozess geeigneten Kunststoff gefertigt, der bei einer Temperatur von 10°C bis 120°C eine Brechzahl von 1,3 bis 1,6 aufweist. Der Preformboden 3 weist eine Innenwandung 17 und eine Aussenwandung 18 auf, die eine flache Zerstreuungslinse begrenzen. Die Krümmungsradien r, s der Innenwandung 17 bzw. der Aussenwandung 18 des Preformbodens (3) besitzen dazu Krümmungsradien b, c, die wenigstens um einen Faktor 1,4 grösser sind als zugehörige Krümmungsradien r, s der Innenwandung 7 und der Aussenwandung 8 des Preformkörpers 2. Der Preformboden 3 weist im Bereich der Achse A des Preforms 1, welcher zugleich das Zentrum der Zerstreuungslinse bildet, eine Wandstärke auf, die um wenigstens 0,2 mm kleiner ist als im Bereich des Übergangs zum Preformkörper 2. Insbesondere ist der Preformboden 3 derart ausgebildet, dass im wesentlichen senkrecht zur Preformachse A eingebrachte elektromagnetische Strahlung einer Wellenlänge von 0,5 µm bis 2 µm zu einem wesentlichen Teil durch Totalreflexion innerhalb des Preformbodens 3 und/oder des Körpers 2 des Preforms 1 absorbiert wird.

Fig. 2 zeigt den erfindungsgemässen Preform, der wiederum gesamthaft mit dem Bezugszeichen 1 versehen ist, in halbseitig axial geschnittener Darstellung. Der längliche, üblicherweise zylindrische Preformkörper trägt das Bezugszeichen 2, der Preformboden ist mit 3 bezeichnet. Das an den Preformkörper 2 anschliessende Halsteil trägt das Bezugszeichen 4, die Gewindeabschnitte sind bei 5 angedeutet. Die Achse des Preforms ist mit dem Bezugszeichen A versehen. Ein Transferring 6 trennt das Halsteil 4 vom Preformkörper 2. Der Transferring 6 dient zum Transport und zur Abstützung des Preforms und des daraus hergestellten Kunststoffbehälters in bestimmten Anlagenabschnitten der Streckblasvorrichtung. Der Preform 1 weist im Bereich des Preformkörpers 2 eine Innenwandung 7 sowie eine Aussenwandung 8 auf. Die Innenwandung 7 im Bereich des Preformkörpers 2 weist einen Krümmungsradius r auf. Die Aussenwandung 8 des Preformkörpers 2 besitzt einen Krümmungsradius, der mit dem Bezugszeichen s versehen ist. Im Bereich des Preformbodens 3 ist die Innenwandung mit dem Bezugszeichen 17 und die Aussenwandung mit dem Bezugszeichen 18 versehen. Die Innenwandung 17 im Bereich des Preformbodens 3 besitzt einen Krümmungsradius, der bei b angedeutet ist, die Aussenwandung 18 im Bereich des Preformbodens 3 einen Krümmungsradius, der bei c angedeutet ist.

Der Preformboden 3 ist nach der Art einer plankokaven bzw. konvexkonkaven Zerstreuungslinse ausgebildet. Die Begriffe "plan" bzw. "konvex" beziehen sich dabei auf die erste Fläche, auf welche die eingestrahlte elektromagnetische Strahlung auftrifft, d.h. auf die Aussenwandung 18 des Preformbodens 3. Der Begriff "konkav" betrifft die gegenüberliegende Innenwandung 17 des Preformbodens 3. Die Aussenwandung 18 des Preformbodens 3 weist einen grösseren Krümmungsradius c auf als die Innenwandung 17 des Preformbodens. Im Fall einer planen Ausbildung der Aussenwandung 18 des Preformbodens 3 ist der Krümmungsradius c unendlich gross.

Durch die erfindungsgemässe Ausbildung des Preformbodens 3 wird ein Grossteil der im Bereich des Preformbodens 3 eingestrahlten elektromagnetischen Strahlung der Wellenlänge 0,5 µm bis 2 µm durch Totalreflexion innerhalb des Preformbodens 3 und/oder des Körpers 2 des Preforms 1 absorbiert bzw. von der Innenwandung des Preforms 1 wieder nach aussen reflektiert. Totalreflexion tritt beim Übergang vom optisch dichteren Medium zum optisch dünneren Medium auf. Eine elektromagnetische Strahlung, die aus einem optisch dichteren Medium (Medium mit höherer Brechzahl n1) in eine optisch dünneres Medium (Medium mit kleinerer Brechzahl n2) wird gemäss dem Snelliusschen Brechungsgesetz an der Grenzfläche vom Einfallslot weg gebrochen. Der Brechungswinkel ist grösser als der Einfallswinkes der elektromagnetischen Strahlung (z.B. Infrarotstrahlung). Vergrössert man den Einfallswinkel, so verläuft der gebrochene Strahl ab einem bestimmten Winkel parallel zur Grenzfläche. Dieser kritische Winkel wird auch Winkel der Totalreflexion genannt. Der Winkel der Totalreflexion ergibt sich als arcsin (n2 / n1). Durch die erfindungsgemässe Ausbildung des Preformbodens 3 wird ein Grossteil der flach im Bodenbereich eingestrahlten elektromagnetischen Strahlung absorbiert.

Die flache Ausbildung des Preformbodens 3 hat auch hinsichtlich der Wechselwirkung des Preformbodens 3 mit dem Reckdorn Vorteile. Beim Streckblasen wird der Preform 1 mit Hilfe eines Reckdorns in Längsrichtung gereckt. Der Reckdorn weist an seinem freien Vorderende einen relativ kleinen Krümmungsradius auf, während der Krümmungsradius b der Innenwandung 17 des Preformbodens 3 relativ gross ist. Dadurch kommt es beim Reckvorgang nur zu einem sehr kleinen Berührungsbereich zwischen dem Preformboden 3 und dem Reckdom. Dadurch kühlt der Preformboden 3 weniger stark ab und das dort befindliche Kunststoffmaterial steht weiter für den Streck- und Blasvorgang zur Verfügung.

Der erfindungsgemäss ausgebildete Preform 1 für die Weiterverarbeitung in einem zweistufigen Streckblasprozess besteht aus für den Streckblasprozess geeigneten Kunststoffen, die bei einer Temperatur von 10°C bis 120°C eine Brechzahl von 1,3 bis 1,6 aufweisen, beispielsweise aus Polyester, PET (Polyethylenterephthalat), Polyolefinen, Polystyrole und PLA (Polymilchsäuren) oder deren Abmischungen. Der Preform 1 kann ein- oder mehrschichtig aufgebaut sein. Er kann mit Zusatzstoffen, die als Barriere gegenüber Sauerstoff, Wasserdampf oder Kohlendioxid dienen, und/oder mit Füllstoffen versehen sein. Der Preform 1 kann eine oder mehrere Farbschichten und/oder Barrierebeschichtungen und/oder Gleitbeschichtungen und/oder Restenleerungsbeschichtungen aufweisen.

Infolge der geringeren Erwärmung der fingerartigen Halterung beim Transport durch die Heizstation wird auch das Halsteil 4 des Preforms 1 weniger stark erwärmt. Dadurch kann es im Halsteil mit einer geringeren Wandstärke ausgebildet werden, als herkömmliche Preforms mit stark bombiertem Boden. Somit können Preforms eingesetzt werden, deren Halsteil im Bereich der Gewindeabschnitte oder dergleichen formschlüssigen Vorsprünge eine Mindestwandstärke w aufweist, die um wenigstens 20 % kleiner ist als eine mittlere Wandstärke im Bereich des Preformkörpers.

## Patentansprüche

1. Preform zur Herstellung von Kunststoffflaschen in einem zweistufigen Streckblasprozess, mit einem länglich ausgebildeten Preformkörper (2), dessen eines Längsende mit einem Preformboden (3) verschlossen ist und an dessen anderes Längsende ein Halsteil (4) mit Gewindeabschnitten (5) oder dergleichen formschlüssigen Vorsprüngen anschliesst, wobei der Preform (1) aus einem für den Streckblasprozess geeigneten Kunststoff gefertigt ist, der bei einer Temperatur von 10°C bis 120°C eine Brechzahl von 1,3 bis 1,6 aufweist, **dadurch gekennzeichnet, dass** eine Aussenwandung (18) und eine Innenwandung (17) des Preformboden (3) eine flache Zerstreuungslinse begrenzen und jeweils Krümmungsradien (c, b) aufweisen, die wenigstens um einen Faktor 1,4 grösser sind als ein zugehöriger Krümmungsradius (s) einer Aussenwandung (8) bzw. ein Krümmungsradius (R) einer Innenwandung (7) des Preforms (1) im Bereich des Preformkörpers (2).

2. Preform nach Anspruch 1, **dadurch gekennzeichnet, dass** der als flache Zerstreuungslinse ausgebildete Preformboden (3) im Bereich der Preformachse (A) eine Wandstärke aufweist, die um wenigstens 0,2 mm kleiner ist als seine Wandstärke im Bereich seines Übergangs in den Preformkörper (2).

3. Preform nach einem der vorangehenden Ansprüche, **dadurch gekennzeichnet, dass** sein Preformboden (3) derart als flache Zerstreuungslinse ausgebildet ist, dass eine im wesentlichen senkrecht (A) zur Preformachse eingebrachte elektromagnetische Strahlung (R) einer Wellenlänge von 0,5 µm bis 2 µm zu einem wesentlichen Teil durch Totalreflexion im Preformboden (3) und/oder im Preformkörper (2) absorbiert wird.

4. Preform nach einem der vorangehenden Ansprüche, **dadurch gekennzeichnet, dass** er aus einem Kunststoff bzw. aus einem Kunststoffgemisch der Gruppe bestehend aus Polyester, PET, Polyolefinen, Polystyrole und PLA gefertigt ist.

5. Preform nach einem der vorangehenden Ansprüche, **dadurch gekennzeichnet, dass** er ein- oder mehrschichtig aufgebaut ist.

6. Preform nach einem der vorangehenden Ansprüche, **dadurch gekennzeichnet, dass** er in einem Kunststoffspritzverfahren hergestellt ist und sich der Anspritzbereich im Bereich des Bodens (3) des Preforms befindet.

7. Preform nach einem der Ansprüche 1 - 5, **dadurch gekennzeichnet, dass** er in einem Kunststofffliesspressverfahren hergestellt ist.

8. Preform nach einem der Ansprüche 1 - 5, **dadurch gekennzeichnet, dass** er in einem Extrusionsblasverfahren hergestellt ist.

9. Preform nach einem der vorangehenden Ansprüche, **dadurch gekennzeichnet, dass** er mehrschichtig aufgebaut ist und wenigstens eine Farbschicht aufweist.

10. Preform nach einem der vorangehenden Ansprüche, **dadurch gekennzeichnet, dass** er in seinem Bodenbereich eine Aussenwandung besitzt, die eine grössere Rauigkeit aufweist als eine Aussenwandung des Körpers des Preforms.

11. Preform nach einem der vorangehenden Ansprüche, **dadurch gekennzeichnet, dass** das Halsteil (4) im Bereich der Gewindeabschnitte (5) oder dergleichen formschlüssigen Vorsprünge eine Mindestwandstärke (w) aufweist, die um wenigstens 20 % kleiner ist als eine mittlere Wandstärke im Bereich des Preformkörpers (2).

12. Preform nach einem der vorangehenden Ansprüche, **dadurch gekennzeichnet, dass** das Halsteil (4) im Bereich der Gewindeabschnitte (5) oder dergleichen formschlüssigen Vorsprünge, insbesondere am Gewindegrund, eine Mindestwandstärke aufweist, die kleiner ist als 1,34 mm.

## Claims

1. Preform for producing plastic containers in a two-stage stretch blow-molding process, with an elongated preform body (2), whose one longitudinal end is sealed with a preform base (3) and to whose other longitudinal end a neck portion (4) with threaded sections (5) or similar positive protrusions is connected, which preform (1) is manufactured from a plastic material that is suitable for the stretch blow-molding process, which has a refractive index of 1.3 to 1.6 at a temperature of 10°C to 120°C, **characterized in that** an outside wall (18) and an inside wall (17) of the preform base (3) delimit a flat divergent lens, and in each case have radii of curvature (c, b) that are larger by at least a factor 1.4 than a related radius of curvature (s) of an outside wall (8) or a radius of curvature (R) of an inside wall (7) of the preform (1) in the region of the preform body (2).

2. Preform according to Claim 1, wherein the preform base (3) that is designed as a flat divergent lens has a wall thickness, in the region of the preform axis (A), that is smaller by at least 0.2 mm than its wall thickness in the region of its transition into the preform body (2).

3. Preform according to one of the preceding claims, wherein its preform base (3) is designed as a flat divergent lens in such a way that an electromagnetic radiation (R) of a wavelength of 0.5 µm to 2 µm, which is introduced essentially perpendicular (A) to the preform axis, is absorbed to a significant extent by total reflection into the preform base (3) and/or into the preform body (2).

4. Preform according to one of the preceding claims, wherein it is manufactured from a plastic or from a plastic mixture of the group that consists of polyester, PET, polyolefins, polystyrenes and PLA.

5. Preform according to one of the preceding claims, wherein it comprises one or multiple layers.

6. Preform according to one of the preceding claims, wherein it is produced in a plastic injection method, and the injection point is located in the region of the base (3) of the preform.

7. Preform according to one of Claims 1-5, wherein it is produced in a plastic extrusion press method.

8. Preform according to one of Claims 1-5, wherein it is produced in an extrusion blow-molding method.

9. Preform according to one of the preceding claims, wherein it is composed of multiple layers and has at least one color layer.

10. Preform according to one of the preceding claims, wherein in its base region, it has an outside wall that has a greater roughness than an outside wall of the body of the preform.

11. Preform according to one of the preceding claims, wherein in the region of the threaded sections (5) or similar positive protrusions, the neck portion (4) has a minimum wall thickness (w) that is smaller by at least 20% than a mean wall thickness in the region of the preform body (2).

12. Preform according to one of the preceding claims, wherein the neck portion (4) in the region of the threaded section (5) or similar positive protrusions, in particular on the threaded base, has a minimum wall thickness that is smaller than 1.34 mm.

## Revendications

1. Préforme destinée à la fabrication de bouteilles en matière de synthèse selon un procédé de soufflage-étirage en deux étapes comportant un corps de préforme (2) de forme oblongue, dont une extrémité longitudinale est fermée par une base (3) de préforme et à l'autre extrémité longitudinale duquel se raccorde un col (4) comportant des filetages partiels (5) ou des saillies de raccordement par la forme similaires, la préforme (1) étant fabriquée à partir d'une matière de synthèse appropriée au processus de soufflage-étirage, qui présente un indice de diffraction de 1,3 à 1,6 à une température comprise entre 10°C et 120°C, ***caractérisée en ce qu'***une paroi extérieure (18) et une paroi intérieure (17) de la base (3) de préforme délimitent une lentille divergente plate et présentent respectivement des rayons de courbure (c, b) qui sont au moins 1,4 fois plus grands qu'un rayon de courbure (s) correspondant d'une paroi extérieure (8) et respectivement un rayon de courbure (R) correspondant d'une paroi intérieure (7) de la préforme (1) dans la zone du corps (2) de préforme.

2. Préforme selon la revendication 1 **caractérisée en ce que** la base (3) de préforme a une forme de lentille divergente plate dans le domaine de l'axe (A) de préforme présente une épaisseur de paroi qui est inférieure d'au moins 0,2 mm à son épaisseur de paroi dans la zone de transition avec le corps (2) de préforme.

3. Préforme selon l'une des revendications qui précèdent **caractérisée en ce que** sa base (3) de préforme a une conformation de lentille divergente plate telle qu'un rayonnement électromagnétique (R) introduit essentiellement perpendiculairement à l'axe de préforme (A), d'une longueur d'onde de 0,5 micromètre à 2 micromètres, est absorbé jusqu'à une partie importante par réflexion totale dans le fond (3) de préforme et/ou dans le corps (2) de préforme.

4. Préforme selon l'une des revendications qui précèdent **caractérisée en ce qu'**elle est fabriquée à partir d'une matière de synthèse, ou respectivement à partir d'un mélange de matières de synthèse du groupe constitué du polyester, du PET, des polyoléfines, des polystyrènes et du PLA.

5. Préforme selon l'une des revendications qui précèdent **caractérisée en ce qu'**elle est constituée d'une ou de plusieurs couches.

6. Préforme selon l'une des revendications qui précèdent **caractérisée en ce qu'**elle est fabriquée selon un procédé d'injection de matière de synthèse et **en ce que** la zone d'application de l'injection se trouve dans la zone de base (3) de la préforme.

7. Préforme selon l'une des revendications 1 à 5 **caractérisée en ce qu'**elle est fabriquée selon un procédé de fluage à la presse de matière de synthèse.

8. Préforme selon l'une des revendications 1 à 5 **caractérisée en ce qu'**elle est fabriquée selon un procédé de soufflage-extrusion.

9. Préforme selon l'une des revendications qui précèdent **caractérisée en ce qu'**elle est constituée de plusieurs couches et présente au moins une couche colorée.

10. Préforme selon l'une des revendications qui précèdent **caractérisée en ce qu'**elle est dotée, dans sa zone de base, d'une paroi extérieure qui présente une plus grande rugosité que celle d'une paroi extérieure du corps de préforme.

11. Préforme selon l'une des revendications qui précèdent **caractérisée en ce que** le col (4) présente dans la zone des filetages partiels (5) ou des saillies de raccordement par la forme similaires, une épaisseur de paroi minimum (w) qui est d'au moins 20 % inférieure à une épaisseur de paroi moyenne dans la zone du corps (2) de préforme.

12. Préforme selon l'une des revendications qui précèdent **caractérisée en ce que** le col (4) présente dans la zone des filetages partiels (5) ou des saillies de raccordement par la forme similaires, en particulier en fond de filet, une épaisseur de paroi minimum qui est inférieure à 1,34 mm.
